# EUROPÄISCHE PATENTSCHRIFT

(11) **EP 1 633 934 B1**
(45) Veröffentlichungstag und Bekanntmachung des Hinweises auf die Patenterteilung: **09.02.2011**
(21) Anmeldenummer: 04735889.0
(22) Anmeldetag: 03.06.2004
(51) Int. Cl.: E04B 1/80, F16L 59/065

(54) **VAKUUMISOLATIONSPANEEL ENTHALTEND EINE MIKROPÖRSE WÄRMEDÄMMPLATTE MIT ERHÖHTER MECHANISCHER FESTIGKEIT UND SEIN HERSTELLUNGSVERFAHREN**
VACUUM INSULATION PANEL CONTAINING A MICROPOROUS HEAT INSULATING PLATE WITH INCREASED MECHANICAL RESISTANCE AND ITS METHOD OF MANUFACTURE
PANNEAU D'ISOLATION SOUS VIDE CONTENANT UN PANNEAU CALORIFUGE AYANT UNE RESISTANCE MECANIQUE AMELIOREE ET SON PROCEDE DE PRODUCTION

(30) Priorität: 05.06.2003 DE 10325607
(43) Veröffentlichungstag der Anmeldung: 15.03.2006
(73) Patentinhaber: Wacker Chemie AG, 81737 München (DE)
(72) Erfinder: EYHORN, Thomas, 87452 Altusried (DE); HENN, Dieter, 87448 Waltenhofen (DE); RELL, Andreas, 87448 Waltenhofen (DE)
(74) Vertreter: Fiener, Josef
(86) Internationale Anmeldenummer: PCT/EP2004/006008
(87) Internationale Veröffentlichungsnummer: WO 2004/109026

(56) Entgegenhaltungen:
- US-A- 4 000 246
- US-A- 4 359 496
- US-A- 4 636 416
- US-A- 5 950 450

## Beschreibung

Die vorliegende Erfindung betrifft ein Vakuumisolationspaneel (VIP) enthaltend eine mikroporöse Wärmedämmplatte mit erhöhter mechanischer Festigkeit als Kernmaterial.

Die Wärmeleitzahl von Dämmplatten lässt sich drastisch reduzieren, wenn im System ein Vakuum vorliegt. Dies ist z.B. aus US 5,950,450, oder DE 4339435 bekannt. Eine kostengünstige Lösung zur Herstellung eines solchen VIPs beinhaltet eine mikroporöse Wärmedämmplatte, welche in eine Verbundfolie vakuumdicht eingeschweißt wird. Nachdem die Platten evakuiert sind, kommt es durch den umgebenden Luftdruck zu einer Verdichtung der Platten, woraus ein linearer Schrumpf der Platten resultiert, der je nach Ausführung der Platten mehrere Prozent in Länge, Breite und Höhe betragen kann. Bei der Auslegung der Maße für die Platte wird dieser Schwund zwar berücksichtigt, dennoch sind die Maßtoleranzen der Platten bei den hohen Schwundwerten recht hoch. Deshalb kommt es beim Aneinandersetzen einzelner Platten häufig zu unerwünschten Lücken, die die ansonsten sehr gute Wärmedämmung des Systems verschlechtert. Nachteiligerweise bewirkt der Schrumpf zudem eine Faltenbildung der Folie auf der VIP Oberfläche. Diese unerwünschte Faltenbildung nimmt mit zunehmender Größe der Platte zu. So stellen die Falten auf der Oberseite von VIP Platten, z.B. bei der Herstellung von Kühlschränken, ein Problem dar, wenn die Platte mittels Kleber oder Klebefolie eingebaut und fixiert wird. Die Unebenheit durch die Falten bewirkt, dass große Mengen an Kleber verwendet werden müssen oder aufwendige Verfahren angewendet werden müssen um die Platte zu befestigen, was den Prozess zur Herstellung der Fertiggeräte verteuert. Die faltenbedingte Unebenheit verhindert außerdem, dass der gesamte zur Verfügung stehende Bauraum vollständig mit der VIP Platte ausgefüllt werden kann.

Dies, sowie die hohen Toleranzen, ist insbesondere auch bei VIP Platten für Fassadenelemente ein Nachteil. Die Falten werden beim Handling der Platten leicht beschädigt, was wiederum die Lebensdauer der Platte verkürzt.

Um das starke Schrumpfen und die Faltenbildung zu vermeiden wird die Dichte der mikroporösen Platte, welche als Kernmaterial für ein VIP eingesetzt wird, angehoben. Dadurch wird die mechanische Festigkeit der mikroporösen Platte erhöht. Nachteiligerweise erhöht dies allerdings auch deutlich die Wärmeleitzahl. So erhöht sich die Wärmeleitzahl der VIP Platte um 50% wenn die Dichte des Kernmaterials um 50% erhöht wird. Zudem erhöht diese Maßnahme die Rohstoffkosten.

Die Faltenbildung lässt sich ferner durch eine Strukturierung der Oberfläche wie aus DE 4432896 A bekannt, vermeiden. Diese Maßnahme ist jedoch sehr kostenintensiv.

Auch eine Zugabe von armierenden oder festigkeitssteigernden Zuschlagstoffen vermindert die Faltenbildung. Daraus resultiert aber ebenfalls in der Regel eine Erhöhung der Dichte oder bei gleicher Dichte eine Erhöhung der Wärmeleitfähigkeit der Platte.

Aufgabe der vorliegenden Erfindung ist es, einen plattenförmigen, evakuierten und wärmedämmenden Formkörper (Vakuumisolationspaneel) zur Verfügung zu stellen, welcher preisgünstig herzustellen ist und welcher die beschriebenen Nachteile nicht aufweist.

Die Aufgabe wird gelöst durch ein Vakuumisolationspaneel umfassend eine Wärmedämmplatte aus einem mikroporösen Material in einer Umhüllung bestehend aus einer metallhaltigen Folie, wobei in der Umhüllung ein Unterdruck herrscht und die Umhüllung die Wärmedämmplatte vakuumdicht umschließt, dadurch gekennzeichnet, dass in dem mikroporösen Material Ammoniak in Mengen von mehr als 0,1 Normliter pro 10 kg mikroporöses Material vorhanden ist.

Vorzugsweise ist in dem mikroporösen Material 0,2 bis zu 50 Normliter Ammoniak pro 10 kg mikroporöses Material vorhanden.

Die Wärmedämmplatte setzt sich bis auf den erfindungsgemäß vorhandenen Ammoniakgehalt zusammen wie übliche Platten aus mikroporösem Isoliermaterial. Solche sind z.B. aus DE-4432896, US-5911903, EP-B-0937939, EP-B-1004358 oder EP-A-1304315 bekannt. Auf diese Literaturstellen wird daher in Hinblick auf die Zusammensetzung der Wärmedämmplatte bis auf den Ammoniakgehalt ausdrücklich Bezug genommen.

Besonders bevorzugt handelt es sich um Mischungen enthaltend pyrogene Kieselsäure, insbesondere bevorzugt pyrogene Kieselsäuren mit einer BET > 100m²/g. Die Plattendichte liegt vorzugsweise bei > 80 kg/m³ besonders bevorzugt bis 300 kg /m³.

Eine Wärmedämmplatte im erfindungsgemäßen VIP setzt sich beispielsweise wie folgt zusammen:
20 - 90 Gew.% feinteiliges Metalloxid mit einer BET > 100m²/g
0-50 Gew. Trübungsmittel wie z.B. SiC, Rutil, Zirkonsilicat, Ilmenit,
0-10% armierende organische oder anorganische Fasern
0-50% organische oder anorganische Füllstoffe sowie Ammoniak einer Menge größer 0,1 Normliter/10 kg Mischung.

Bei der metallhaltigen Folie handelt es sich vorzugsweise um eine Verbundfolie mit einer oder mehreren metallisierten Schichten oder um eine Verbundfolie mit einer Schicht aus Metall, vorzugsweise Aluminium.

Das erfindungsgemäße VIP weist an seiner Oberfläche weniger Falten auf als herkömmliche Vakuumisolationspaneele. Die erfindungsgemäß vorhandene ammoniakhaltige, mikroporöse, evakuierte Platte weist eine deutlich bessere mechanische Festigkeit auf als herkömmliche mikroporöse Platten mit vergleichbarer Wärmeleitzahl und weist eine deutlich niedrigere Wärmeleitzahl auf als herkömmliche mikroporöse Platten mit einer vergleichbaren mechanischen Festigkeit, welche dort aber, wie ausgeführt, auf einer mit Nachteilen behafteten Erhöhung der Materialdichte beruht.

Die Erfindung betrifft auch Behälter wie Transportbehälter, oder Kühlschränke, oder flächige Anwendungen wie Fassadenelemente, oder Fußböden, die dadurch gekennzeichnet sind, dass sie erfindungsgemäße VIPs enthalten.

Die Erfindung betrifft ferner die Verwendung der erfindungsgemäßen VIPs in Transportbehältern, Kühlschränken und flächigen Anwendungen wie Fassadenelementen oder Fußböden.

Die erfindungsgemäßen VIPs eignen sich generell zum Einsatz überall dort, wo Falten auf der Oberfläche der VIPs stören. Beispiele dafür sind Kühlschränke, Transportboxen mit hochwirksamer Wärmedämmung, ebene Fassadenelemente bestehend aus einer oder mehreren Platten, flächige Aufbauten wie Wand und Boden von z.B. Kühlhäusern.

Die erfindungsgemäßen Platten eignen sich insbesondere zur großflächigen Dämmung wie sie z.B. für Kühlschränke, Transportkisten, Fassadenelementen und Fußböden notwendig ist.

Die erfindungsgemäßen VIPs werden mittels eines üblichen Verfahrens hergestellt. Dabei werden zunächst die einzelnen Rohstoffe zur Herstellung einer Wärmedämmplatte innig miteinander in einem Mischaggregat vermischt. Während des Mischvorgangs wird gasförmiger Ammoniak in Mengen von 0,1 Normliter bis 50 Normliter / 10 kg Mischung oder Ammoniak freisetzende Substanzen in Mengen, die Ammoniak in den genannten Mengen freisetzen, zugegeben, wodurch sich eine gleichmäßige Verteilung ergibt. Anschließend wird die Mischung zu Platten verpresst, die Platten werden dann in eine Umhüllung bestehend aus einer metallhaltigen Folie eingebracht und nach einem Evakuieren in die Umhüllung luftdicht eingeschweißt. Die Zugabe des Ammoniaks kann auch nach dem Mischen, vor dem Pressvorgang, in den Vorlagebehälter eingegeben werden, was jedoch eine nicht optimale Verteilung bewirkt. Es ist ebenfalls möglich, die Kieselsäure und oder andere Rohstoffe vor dem Mischprozess mit der benötigten Menge an Ammoniak zu beaufschlagen.

Ein Beispiel für eine Ammoniak freisetzende Substanz ist eine wässrige Ammoniaklösung.

Die mit diesem Verfahren hergestellten Platten weisen bei gleicher Dichte nach dem Evakuieren auf 0,1 bis 100 mbar einen im Vergleich zu Platten ohne Ammoniak um ca. 50 % verminderten linearen Schrumpf und dadurch deutlich weniger bzw. keine Falten auf der Oberfläche auf.

Die Erhöhung der Festigkeit des mikroporösen Materials durch den Zusatz von Ammoniak oder ammoniakbildenden Substanzen ist im evakuierten Zustand deutlich vorhanden. Völlig unerwartet ist jedoch, dass sich die Zugabe des Ammoniak nicht negativ auf die Evakuiereigenschaften auswirkt, da davon ausgegangen werden musste, dass analog dem Zutritt von Feuchtigkeit durch die Zugabe eines gasförmigen Stoffes, welcher eine innige Bindung mit der pyrogenen Kieselsäure eingeht, die Evakuiereigenschaften des mikroporösen Materials negativ beeinflusst werden. Ferner war zu erwarten, dass entweder bei gleicher Evakuierdauer ein höherer Druck im Material vorhanden bleibt, oder dass sich bei gleichem Enddruck die Evakuierzeit zum Erreichen des Drucks drastisch verlängert. Überraschenderweise zeigte sich jedoch, dass sich durch die Verwendung von Ammoniak sogar niedrigere Enddrücke erzielen lassen können, was eine positive Auswirkung auf die Dauerhaltbarkeit des Vakuums hat. Die folgenden Beispiele dienen der weiteren Erläuterung der Erfindung.

Vergleichsbeispiel:
80 Gew.% pyrogener Kieselsäure mit einer spezifischen Oberfläche von 300 m²/g, HDK T30, käuflich erhältlich bei der Fa. Wacker Chemie GmbH, München unter der Bezeichnung HDK T30,
15 Gew.% SiC Pulver der Spezifikation P8, käuflich erhältlich bei der Fa. ESK SiC GmbH, Grefrath, und 5 Gew.% Zellstoff käuflich erhältlich bei der Fa. J. Rettenmaier & Söhne, Rosenberg unter der Bezeichnung Arbocell FIF 400 werden innig vermischt und anschließend zu einer Platte mit den Maßen 500 x 500 x 20mm³ und einer Dichte von 175kg/m³ verpresst. Diese Platte wird in einen Folienbeutel aus Folien der Bezeichnung V08621 käuflich erhältlich bei der Fa. Hanita, Israel, eingeschoben und bei einem Druck von 1 mbar evakuiert und gasdicht versiegelt. Nach 24 Stunden weist diese Platte einen Längen - und Breitenschrumpf von 1,1 % und einen Höhenschrumpf von 5,2 % auf. Es zeigen sich zahlreiche Falten auf der Oberfläche.

### Erfindungsgemäßes Beispiel:

Analog dem Vergleichsbeispiel, allerdings unter Zugabe von 3 Normlitern Ammoniak pro 10 kg Mischung in den Mischprozess wird eine Platte gleicher Dimensionierung und Dichte wie im Vergleichsbeispiel hergestellt. Nach 24 Stunden zeigt sich ein Längen - und Breitenschrumpf von 0,5% und einen Höhenschrumpf von 2,4%. Die Oberfläche der Platte ist frei von Falten.

## Patentansprüche

1. Vakuumisolationspaneel umfassend eine Wärmedämmplatte aus einem mikroporösen Material in einer Umhüllung bestehend aus einer metallhaltigen Folie, wobei in der Umhüllung ein Unterdruck herrscht und die Umhüllung die Wärmedämmplatte vakuumdicht umschließt, **dadurch gekennzeichnet, dass** in dem mikroporösen Material Ammoniak in Mengen von mehr als 0,1 Normliter pro 10 kg mikroporöses Material vorhanden ist.

2. Vakuumisolationspaneel gemäß Anspruch 1, **dadurch gekennzeichnet, dass** in dem mikroporösen Material 0,2 bis zu 50 Normliter Ammoniak pro 10 kg mikroporöses Material vorhanden ist.

3. Vakuumisolationspaneel gemäß Anspruch 1 oder 2, **dadurch gekennzeichnet, dass** es sich bei dem mikroporösen Material um Mischungen enthaltend pyrogene Kieselsäure, bevorzugt pyrogene Kieselsäuren mit einer BET > 100m²/g handelt und die Plattendichte vorzugsweise bei > 80 kg/m³ bis 300 kg /m³ liegt.

4. Vakuumisolationspaneel gemäß einem der Ansprüche 1 bis 3, **dadurch gekennzeichnet, dass** sich die Wärmedämmplatte wie folgt zusammensetzt:
20 - 90 Gew.% feinteiliges Metalloxid mit einer BET > 100m²/g
0-50 Gew. Trübungsmittel wie z.B. SiC, Rutil, Zirkonsilicat, Ilmenit,
0-10% armierende organischen oder anorganischen Fasern
0-50% organischen oder anorganischen Füllstoffen sowie Ammoniak in einer Menge größer 0,1 Normliter/10 kg Mischung.

5. Vakuumisolationspaneel gemäß einem der Ansprüche 1 bis 4, **dadurch gekennzeichnet, dass** die metallhaltige Folie eine Verbundfolie mit einer oder mehreren metallisierten Schichten oder eine Verbundfolie mit einer Schicht aus Metall, vorzugsweise Aluminium, ist.

6. Behälter, die **dadurch gekennzeichnet sind, dass** sie ein Vakuumisolationspaneel gemäß einem der Ansprüche 1 bis 5 enthalten.

7. Verwendung eines Vakuumisolationspaneels gemäß einem der Ansprüche 1 bis 5 in Transportbehältern, Kühlschränken und flächigen Anwendungen wie Fassadenelementen oder Fußböden.

8. Verfahren zu Herstellung eines Vakuumisolationspaneels gemäß einem der Ansprüche 1 bis 5, bei dem die Rohstoffe zur Herstellung einer Wärmedämmplatte aus einem mikroporösen Material innig miteinander vermischt werden, zu Platten verpresst werden, die Platten dann in eine Umhüllung bestehend aus einer metallhaltigen Folie, eingebracht werden und nach einem Evakuieren in die Umhüllung luftdicht eingeschweist werden, **dadurch gekennzeichnet, dass** während der Vermischung der Rohstoffe gasförmiger Ammoniak in Mengen von 0,1 Normliter bis 50 Normliter / 10 kg Mischung oder eine Ammoniak freisetzende Substanz in Mengen die Ammoniak in den genannten Mengen freisetzt, in die Mischung eingebracht wird.

## Claims

1. Vacuum isolation panel comprising a heat insulating panel made of a microporous material in an envelope made of a metal-containing foil, wherein the envelope is evacuated and the envelope encloses the heat insulating panel in a vacuum-tight manner, **characterised in that** the microporous material contains ammonia in amounts of more than 0,1 normal litres per 10 kg of microporous material.

2. Vacuum isolation panel according to claim 1, **characterised in that** in the microporous material contains 0,2 to 50 normal litres ammonia per 10 kg microporous material.

3. Vacuum isolation panel according to claim 1 or 2, **characterised in that** the microporous material includes mixtures containing fumed silica, preferably fumed silica with a BET > 100 m²/g, and the panel density is preferably > 80 kg/m³ up to 300 kg 1/m³.

4. Vacuum isolation panel in accordance with one of claims 1 to 3, **characterised in that** the heat insulating panel is formed as follows:
20-90 wt.-% finely divided metal oxide with a BET > 100m²/g 0-50 wit.-% opacifiers such as SiC, rutile, zirkonsilicate, ilmenite,
0-10% reinforcing organic or inorganic fibers,
0-50% organic or inorganic fillers as well as ammonia in an amount of more than 0,1 normal litres/10 kg mixture.

5. Vacuum isolation panel in accordance with one of claims 1 to 4, **characterised in that** the metal containing foil is a composite film with one or several metalized layers or a composite film with a layer of metal, preferably aluminium.

6. Containers, **characterized in that** they include a vacuum isolation panel in accordance with one of claims 1 to 5.

7. Use of a vacuum isolation panel in accordance with one of claims 1 to 5 in transport containers, refrigerators and laminar applications such as facade components or floors

8. Method of production of a vacuum isolation panel in accordance with one of claims 1 to 5 wherein the raw materials for manufacturing of a heat insulating panel made of a microporous material are intimately mixed with one another, are pressed to panels, the panels are then inserted into an envelope consisting of a metal-containing foil, and the envelope being sealed in airtight manner after evacuation, **characterised in that** during the mixture of the raw materials gaseous ammonia in amounts of 0,1 to 50 normal liters/10 kg of mixture or a substance releasing ammonia in said amounts is introduced into the mixture.

## Revendications

1. Panneau d'isolation sous vide comprenant un panneau calorifuge en matériau microporeux dans une enveloppe composée d'une feuille contenant du métal, une dépression régnant dans l'enveloppe et l'enveloppe renfermant le panneau calorifuge de manière étanche au vide, **caractérisé en ce que** de l'ammoniac est présent dans le matériau microporeux en quantités supérieure à 0,1 litre normal par 10 kg de matériau microporeux.

2. Panneau d'isolation sous vide selon la revendication 1, **caractérisé en ce que** 0,2 à 50 litres normaux d'ammoniac par 10 kg de matériau microporeux sont présents dans le matériau microporeux.

3. Panneau d'isolation sous vide selon la revendication 1 ou 2, **caractérisé en ce que** le matériau microporeux est constitué de mélanges contenant de l'acide silicique pyrogène, de préférence des acides siliciques pyrogènes avec une BET > 100 m²/g et que la densité de plaque est de préférence comprise entre > 80 kg/m³ et 300 kg/m³.

4. Panneau d'isolation sous vide selon une des revendications 1 à 3, **caractérisé en ce que** le panneau calorifuge se compose comme suit :
20 à 90 % en poids d'oxyde métallique en fines particules avec une BET > 100 m²/g,
0 à 50 % en poids d'opacifiant comme p. ex. du SiC, du rutile, du silicate de zirconium, de l'ilménite,
0 à 10 % de fibres d'armature organiques ou anorganiques,
0 à 50 % de matières de remplissage organiques ou anorganiques ainsi que de l'ammoniac dans une quantité supérieure à 0,1 litre normal/10 kg de mélange.

5. Panneau d'isolation sous vide selon une des revendications 1 à 4, **caractérisé en ce que** la feuille contenant du métal est une feuille composite comportant une ou plusieurs couches métallisées ou une feuille composite comportant une couche en métal, de préférence en aluminium.

6. Récipients qui sont **caractérisés en ce qu'**ils contiennent un panneau d'isolation sous vide selon une des revendications 1 à 5.

7. Utilisation d'un panneau d'isolation sous vide selon une des revendications 1 à 5 dans des récipients de transport, des réfrigérateurs et des applications à plat comme des éléments de façade ou des planchers.

8. Procédé de fabrication d'un panneau d'isolation sous vide selon une des revendications 1 à 5, dans lequel les matières premières pour fabriquer un panneau calorifuge en matériau microporeux sont intimement mélangés ensemble, pressées en panneaux, les panneaux ensuite placés dans une enveloppe composée d'une feuille contenant du métal et, après une évacuation de l'air, scellés hermétiquement dans l'enveloppe, **caractérisé en ce que** pendant le mélange des matières premières, de l'ammoniac gazeux en quantités de 0,1 litre normal à 50 litres normaux /10 kg de mélange ou une substance libérant de l'ammoniac en quantités qui libère de l'ammoniac dans les quantités mentionnées est introduit(e) dans le mélange.
